# FASCICULE DE BREVET EUROPEEN

(11) **EP 0 939 263 B1**
(45) Date de publication et mention de la délivrance du brevet: **21.04.2004**
(21) Numéro de dépôt: 99400060.2
(22) Date de dépôt: 12.01.1999
(51) Int. Cl.: F16L 23/02, F16L 23/18

(54) **Joint d'étanchéité pour bride de tuyauterie**
Pipe flange sealing ring
Dichtring für einen Rohrflansch

(30) Priorité: 26.02.1998 FR 9802341
(43) Date de publication de la demande: 01.09.1999
(73) Titulaire: Loth, Christian, 61230 Gace (FR)
(72) Inventeur: Loth, Christian, 61230 Gace (FR)
(74) Mandataire: Gorrée, Jean-Michel

(56) Documents cités:
- DE-A- 2 105 381
- DE-A- 2 738 244
- DE-U- 1 755 658
- DE-U- 7 835 369
- GB-A- 2 229 047

## Description

La présente invention concerne des perfectionnements apportés aux joints d'étanchéité destinés à être enserrés entre deux brides de raccordement de tuyauterie et l'invention s'attache plus particulièrement à de tels joints tels que définis dans le préambule de la revendication 1.

Dans le domaine de la tuyauterie industrielle, en particulier dans les industries chimique et pétrolière, les tuyauteries peuvent être constituées de tronçons de tuyaux raccordés bout-à-bout à l'aide de brides entre lesquelles sont disposés des joints d'étanchéité. Ces joints présentent notamment des caractéristiques dimensionnelles (diamètre intérieur en particulier) qui sont en correspondance avec le diamètre des brides, lesquelles à leur tour sont en correspondance avec le diamètre du tuyau et la pression nominale admissible. Ces dimensions respectives peuvent être normées.

Il résulte de cet agencement général qu'à chaque diamètre de tuyau correspond un diamètre de bride et donc un diamètre de joint.

En outre, les joints ne peuvent être utilisés que dans les limites d'une pression nomimale pour laquelle ils ont été conçus.

Pour couvrir un grand nombre d'utilisations diverses, il résulte de ces contraintes la nécessité de disposer d'une gamme importante de joints de divers diamètres et acceptant diverses pressions nomimales, ce qui oblige le fabricant aussi bien que l'utilisateur à tenir en réserve un stock encombrant de matériels.

Enfin, les joints actuellement utilisés présentent d'autres inconvénients, notamment : l'impossibilité de contrôler les caractéristiques d'un joint en place entre les brides serrées; possibilité de remployer un joint déjà utilisé et ayant déjà été comprimé; impossibilité de contrôler le centrage correct du joint dès que les deux brides sont présentées l'une en face de l'autre de part et d'autre du joint.

On connaît déjà des joints d'étanchéité pour brides qui sont munis de pattes rayonnantes pliables à environ 90° (voir par exemple DE-U- 78 35 369, DE-A- 27 38 244). Dans ces joints connus, les pattes pliables sont destinées à supporter le joint sur une bride de dimension donnée et éventuellement à sa fixation sur celle-ci (cas du document DE-U- 78 35 369).

L'invention a ainsi essentiellement pour objet de proposer une solution technique simple qui donne mieux satisfaction aux diverses exigences de la pratique et qui élimine, ou tout au moins réduise les divers inconvénients précités, en proposant une structure originale de joint d'étanchéité pour tuyauterie industrielle à brides qui puisse être utilisé pour l'ensemble d'une gamme de brides de diamètres divers de manière à réduire les stocks de matériels en réserve aussi bien chez le fabricant que chez l'utilisateur, qui conduise à un positionnement aisé et à un centrage contrôlable même sur des brides verticales, qui autorise un contrôle de ses caractéristiques après montage entre les brides, qui ne puisse plus être réutilisé après démontage, et qui au bout du compte conserve les caractéristiques d'étanchéité et mécaniques des joints antérieurs et ne présente pas un surcoût sensible de fabrication.

A ces fins, l'invention propose un joint d'étanchéité comportant les dispositions énoncées dans la partie caractérisante de la revendication 1.

Grâce à la conformation spécifique de ses pattes, un joint conforme à l'invention peut être monté indifféremment sur une pluralité de brides de dimensions diverses (brides appartenant à une gamme d'étendue dimensionnelle donnée ; brides correspondant à des normalisations différentes ; etc.).

Dans ces conditions, il est parfaitement envisageable de constituer un joint de diamètre et de caractéristiques mécaniques propres à l'équipement de brides de divers diamètres susceptibles de supporter des pressions dans une fourchette donnée. Ainsi, dans un exemple typique, on peut prévoir la mise en oeuvre de seulement deux types de joints différents ayant le même diamètre extérieur, à savoir :
- joints basse-pression pour des pressions nominales jusqu'à 100 bar/mm,
- joints haute-pression pour des pressions nominales de 150 à 420 bar/mm.

Dans un mode de réalisation pratique, les pattes rayonnantes sont au nombre de quatre, deux à deux sensiblement diamétralement opposées et mutuellement décalées angulairement d'environ 90°.

Un tel agencement de pattes rayonnantes, qui avantageusement sont rapportées par soudures sur la partie annulaire métallique du joint, offre l'avantage considérable de laisser intacte la partie formant joint d'étanchéité proprement dit : celui-ci peut donc continuer à être constitué comme un joint antérieur de même type et continue à présenter les mêmes caractéristiques fonctionnelles.

En partie, les dispositions propres à l'invention peuvent s'appliquer à des joints de types divers, c'est-à-dire des joints dans lesquels la susdite partie annulaire rigide constitue une âme rigide du joint, ou bien aussi à des joints dans lesquels la partie annulaire rigide est un anneau rigide entourant extérieurement le joint et possédant une épaisseur inférieure à celui-ci : les joints agencés conformément à l'invention peuvent donc conserver l'organe anti-écrasement.

En définitive, les dispositions conformes à l'invention permettent :
- de simplifier et d'accélérer le positionnement du joint sur une bride, même disposée verticalement,
- de limiter les erreurs lors du choix des joints à monter,
- de simplifier et de réduire les coûts de fabrication et de stockage pour le fabricant,
- de simplifier et de réduire la gamme des produits à utiliser et de diminuer le coût du stockage pour l'utilisateur.

Les dispositions de l'invention trouvent une application tout particulièrement intéressante, bien que non exclusive, dans les joints dits "métalloplastiques revêtus" comportant une garniture annulaire formant âme entourée d'une enveloppe métallique qui est revêtue, sur ses deux faces principales opposées, de couches respectives d'un matériau anti-adhérent, ledit joint pouvant si nécessaire être muni d'un anneau externe métallique.

On notera également que la mise en oeuvre des dispositions de l'invention n'a aucune incidence sur la structure du contour intérieur du joint, notamment sur la présence ou l'absence d'un anneau intérieur métallique de centrale et/ou anti-écrasement.

L'invention sera mieux comprise à la lecture de la description qui suit de certains modes de réalisation préférés donnés uniquement à titre d'exemple non limitatifs. Dans cette description, on se réfère aux dessins annexés sur lesquels :
- la figure 1 est une vue très schématique, en plan, d'un joint agencé conformément à l'invention ;
- les figures 2A, 2B et 2C illustrent, en perspective, la mise en oeuvre du joint de la figure 1 sur une bride horizontale ;
- les figures 3A et 3B illustrent, en perspective, la mise en oeuvre du joint de la figure 1 sur une bride verticale ; et
- les figures 4 à 7 illustrent, en coupe partielle, divers agencement de joints équipés conformément à l'invention.

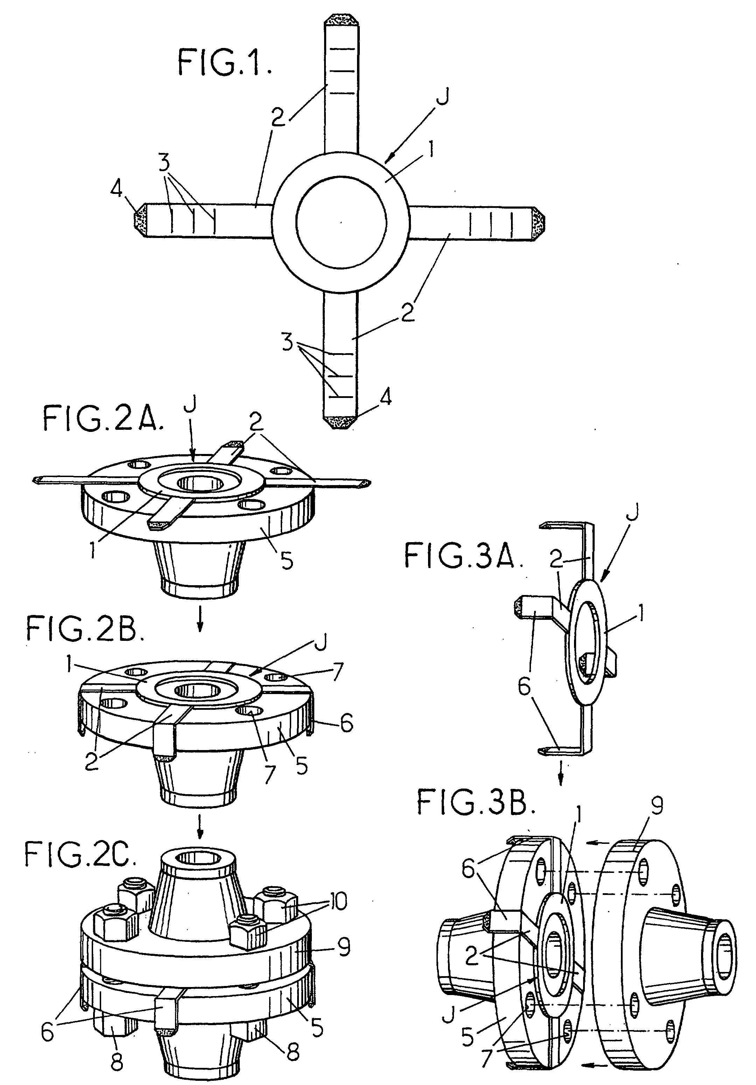

A la figure 1 est représenté de façon schématique un joint annulaire d'étanchéité J destiné à être enserré entre deux brides de raccordement de tuyauterie industrielle, par exemple dans l'industrie chimique ou pétrolière. Ce joint J comporte un anneau d'étanchéité 1 incluant une partie annulaire rigide métallique (non montrée sur la fig. 1) dont divers exemples seront donnés plus loin.

Plusieurs pattes rayonnantes métalliques 2 sont solidaires de la partie annulaire rigide précitée (en étant notamment soudées à celle-ci, mais pouvant également être d'un seul tenant avec celle-ci) et présentent chacune une longueur excédant sensiblement la dimension transversale de la plus grande d'un ensemble de brides destinées à être équipées dudit joint.

Ces pattes peuvent être en nombre quelconque, mais la solution qui semble la plus efficace à la fois sur le plan technique et sur le plan économique consiste à prévoir quatre pattes, deux à deux sensiblement diamétralement opposées et mutuellement décalées angulairement d'environ 90°.

Chaque patte 2 peut comporter avantageusement des repères 3, gravés ou peints, qui sont disposés en correspondance avec des diamètres (en principe normalisés) de brides. Eventuellement certains de ces repères, ou d'autres repères indépendants de ceux-ci, peuvent être prévus, voire prémarqués pour constituer une ligne d'affaiblissement mécanique, en vue d'une découpe de la patte si celle-ci est trop longue et est susceptible de constituer une gène après montage sur la bride.

De plus, les pattes peuvent être peintes, en tout ou partie, d'une façon codifiée en fonction par exemple du diamètre du joint et/ou de la pression nominale et/ou de toute autre information (date de pose par exemple).

D'autres indications, notamment alphanumériques et/ou colorées, peuvent être prévues sur chaque patte en un emplacement prédéterminé de celle-ci (par exemple extrémité 4 peinte différemment), afin de fournir une autre information codifiée, par exemple sur la classe du joint, la pression nominale du joint, sa structure, sa date de pose...

On notera ici que les repères prémarqués 3 cités plus haut entraînent un affaiblissement local de la patte : la patte ne peut donc pas subir plusieurs pliages et dépliages, sous peine de se rompre. Il en résulte l'impossibilité, en pratique, de réutiliser un joint qui a déjà fait l'objet d'un premier montage, ce qui constitue une sécurité contre un emploi multiple, volontaire ou involontaire, d'un même joint.

En se référant maintenant aux figures 2A à 2C, lorsque la bride 5 à équiper du joint J est disposée horizontalement, on peut poser le joint J, pattes 2 déployées, sur la surface de la bride 5 dans une position centrée, en s'aidant pour cela des repères prévus sur les pattes de manière telle que toutes les pattes 2 présentent la même longueur de dépassement au-delà du bord périphérique de la bride 5 (fig. 2A).

Le centrage correct étant obtenu, les pattes 2 sont rabattues contre la périphérie de la bride 5, sans déplacer le joint J par rapport à la bride (fig. 2B). Les extrémités rabattues 6 apparaissent alors sur la périphérie de la bride 5.

On met ensuite en place les boulons de solidarisation 8 dans les trous 7 de la bride prévus à cet effet, puis on dispose, sur la bride 5, la contre-bride 9 qui est automatiquement centrée par les boulons 8 ; enfin on serre les écrous de serrage 10 sur les boulons 8 de manière que les brides 5 et 9 enserrent l'anneau d'étanchéité 1 du joint J avec un effort prédéterminé (fig. 2C). Dans cette position d'assemblage, on remarque que les extrémités rabattues 6 des pattes 2 demeurent visibles et que les indications qu'elles comportent (zones colorées, signes gravés ou peints,...) demeurent visibles : il est donc possible de lire ces indications sans démontage des brides.

Lorsque la bride 5 est en position verticale, on commence par repérer, sur les pattes 2 du joint J, la position qui sera en correspondance avec le bord périphérique de la bride, puis on plie les pattes aux emplacements ainsi repérés (fig. 3A). On met ensuite en place le joint contre la surface verticale de la bride 5, les extrémités rabattues 6 des pattes enserrant la périphérie de la bride 5 et retenant le joint J sur celle-ci (fig. 3B). On peut alors achever l'assemblage de la contre-bride 9 et le serrage du joint J.

Bien entendu, dans le cas précédent d'une bride 5 horizontale, il est possible également de commencer par l'opération de repérage et de pliage des pattes 2 avant de positionner le joint J sur la bride.

D'après les explications qui précèdent, on conçoit les avantages nombreux et essentiels apportés par les pattes 2 solidaires de l'anneau d'étanchéité 1 du joint J.

Il devient aisé de disposer le joint J sur la bride 5 en position centrée, quelle que soit la situation, horizontale et surtout verticale, du joint. En outre, le joint est retenu par les pattes 2 dans ladite position centrée sur la bride 5 lorsque celle-ci est verticale. On écarte ainsi les risques d'erreurs de position et les risques de décalage incontrôlé du joint entre le moment de sa mise en place et le moment de la présentation de la contre-bride.

Le dépassement des extrémités 6 des pattes 2 permet un contrôle visuel, après serrage et éventuellement en cours d'utilisation, du maintien du joint J en position centrée. En outre, les codifications colorées et/ou inscriptions apparaissant sur les extrémités 6 des pattes 2 permettent un contrôle immédiat et rapide des caractéristiques du joint, de son ancienneté,...

On conçoit également aisément qu'un joint agencé conformément à l'invention n'est plus lié à une dimension précise de bride, mais peut être monté sur des brides de dimensions diverses dans une fourchette dimensionnelle prédéterminée, l'anneau d'étanchéité 1 étant alors conçu pour supporter la pression correspondante la plus élevée prévue pour la gamme des brides et tuyauteries correspondante.

Les dispositions inhérentes à l'invention présentent en outre l'avantage de ne pas être attachées à un type de joint spécifique, mais de pouvoir être mises en oeuvre avec tout type de joint présentant une partie métallique(âme rigide) accessible à sa périphérie extérieure, comme cela apparaît sur les quelques exemples qui suivent.

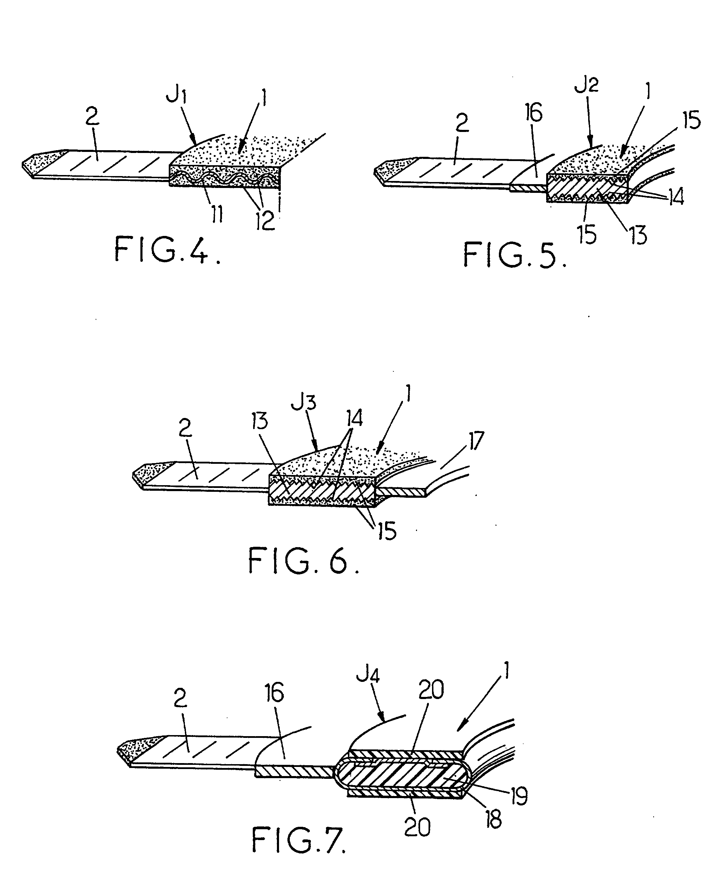

A la figure 4 est représenté, fragmentairement et en perspective avec coupe transversale, un joint J₁ doit "joint ondulé" comportant un anneau d'étanchéité 1 incluant une âme annulaire métallique ondulée 11 enrobée de part et d'autre par deux revêtements en graphite 12. Les pattes 12 sont alors solidarisées par soudure sur le chant de l'âme métallique 12 apparaissant sur le bord externe de l'anneau d'étanchéité 1.

A la figure 5 est représenté de la même manière un joint J₂ dit "joint strié" comportant un anneau d'étanchéité 1 incluant une âme annulaire métallique 13 dont les faces principales opposées 14 sont striées et revêtues de couches de graphite respectives 15. Dans l'exemple représenté, l'anneau d'étanchéité 1 est en outre pourvu d'un anneau externe métallique 16 (par exemple anneau anti-écrasement d'épaisseur calibrée inférieure à celle de l'anneau d'étanchéité) sur lequel sont rapportées les pattes 2. Dans le cas où le joint n'est pas équipé d'un anneau externe 16, les pattes 2 sont rapportées directement sur le chant extérieur de l'âme métallique 13 comme cela est illustré à la figure 6 pour le joint J₃ (lequel est montré équipé, à titre d'exemple, d'un anneau métallique intérieur de centrage 17).

L'invention trouve une application particulièrement intéressante dans les joints métalloplastiques revêtus J₄ illustrés à la figure 7, qui comporte un anneau d'étanchéité 1 constitué d'une enveloppe métallique annulaire 18, par exemple en acier inoxydable qui entoure une garniture intérieure 19 formant âme, par exemple en graphite expansé et qui supporte sur ses deux faces annulaires opposées des couches respectives de revêtement anti-adhérent 20, par exemple en graphite ou en matière synthétique telle que du polytétrafluoroéthylène. Un anneau externe anti-écrasement 16 et/ou un anneau interne peut être solidarisé à l'enveloppe 18. Les pattes 2 sont solidarisées soit directement sur l'enveloppe 18 si aucun anneau anti-écrasement n'est prévu, soit sur l'anneau externe 16 s'il existe.

## Revendications

1. Joint d'étanchéité (J) équipant une bride (5, 9) de raccordement de tuyauterie, ledit joint comportant un anneau d'étanchéité (1) incluant une partie annulaire rigide métallique (11, 13, 18, 16) de laquelle sont solidaires plusieurs pattes rayonnantes métalliques (2) qui ont une longueur excédant la dimension transversale de la bride et qui sont prépliables, avant le montage du joint sur la bride, selon le contour exact de cette bride, **caractérisé**
**en ce que** les pattes (2) comportent plusieurs repères (3) de prépliage, gravés ou peints, correspondant respectivement à plusieurs dimensions transversales prédéterminées de brides et
**en ce qu'**au moins une patte (2) possède une extrémité comportant des indications alphanumériques et/ou colorées (4) d'identification de la classe du joint,
ce grâce à quoi le même joint peut équiper une gamme de brides prédéterminées ayant des dimensions transversales différentes en affichant dans tous les cas une information de la classe du joint qui demeure visible de l'extérieur.

2. Joint selon la revendication 1, **caractérisé en ce que** les pattes rayonnantes (2) sont au nombre de quatre, deux à deux sensiblement diamétralement opposées et mutuellement décalées angulairement d'environ 90°.

3. Joint selon la revendication 1 ou 2, **caractérisé en ce que** la partie annulaire rigide constitue une âme rigide du joint (11, 13, 18).

4. Joint selon la revendication 3, **caractérisé en ce que** la partie annulaire rigide est un anneau rigide (16) entourant extérieurement le joint et possédant une épaisseur inférieure à celui-ci.

5. Joint selon la revendication 4, **caractérisé en ce que** le joint est un joint métalloplastique revêtu (J₄) comportant une garniture annulaire (19) formant âme entourée d'une enveloppe métallique (20) revêtue, sur ses deux faces principales opposées, de couches respectives d'un matériau anti-adhérent, ledit joint pouvant être muni d'un anneau externe métallique (16).

## Claims

1. A sealing gasket (J) fitting out a pipe-work connection flange (5, 9), said gasket comprising a sealing ring (1) including a rigid metal annular part (11, 13, 18, 16) with which a number of radiating metal lugs (2) are integral, which lugs have a length greater than the transverse dimension of the flange and can be prefolded, before the gasket being mounted on the flange, in accordance with the exact contour of this flange, **characterized**
**in that** lugs (2) have several engraved or painted prefolding marks (3) corresponding respectively to several predetermined transverse dimensions of flanges, and
**in that** at least one lug (2) has an end provided with alphanumeric and/or colour marks (4) identifying the category of the gasket,
whereby the same gasket can fit out a set of predetermined flanges which have different transverse dimensions while in any case showing an information on the category of the gasket which remains visible from the outside.

2. A gasket according to claim 1, **characterized in that** the radiating lugs (2) are four in number, substantially diametrically opposite two by two and mutually offset angularly by about 90°.

3. A gasket according to claim 1 or 2, **characterized in that** said rigid annular part is a rigid core of the gasket (11, 13, 18).

4. A gasket according to claim 3, **characterized in that** the rigid annular part is a rigid ring (16) externally surrounding the gasket and being of smaller thickness than said gasket.

5. A gasket according to claim 4, **characterized in that** the gasket is a coated metal jacketed gasket (J₄) comprising an annular filler (19) forming a core surrounded by a metal sheath (20) coated, on its two main opposite faces, with respective layers of a non-stick material, said gasket being able to be provided with an external metal ring (16).

## Patentansprüche

1. Dichtung (J) für einen Rohrflansch (5, 9) zum Verbinden von Rohrleitungen, wobei die Dichtung einen Dichtring (1) umfasst, der einen ringförmigen starren Metallteil (11, 13, 18, 16) aufweist, mit dem mehrere davon strahlenförmig ausgehende Metall-Bändern (2) einstückig verbunden sind, die eine Länge aufweisen, welche die querverlaufende Abmessung des Flanschs überschreitet, und die vor der Montage der Dichtung auf dem Flansch gemäß der exakten Kontur dieses Flanschs vorgebogen werden können, **dadurch gekennzeichnet,**
**dass** die Bänder (2) mehrere Markierungen (3) für das Vorbiegen aufweisen, die eingraviert oder aufgemalt sind und jeweils mehreren vorgegebenen querverlaufenden Abmessungen von Flanschen entsprechen, und dadurch,
**dass** am Ende wenigstens eines Bands (2) alphanumerische und/oder farbige Angaben (4) zum Identifizieren der Dichtungsklasse vorgesehen sind, wodurch eine Reihe vorgegebener Flansche, die unterschiedliche querverlaufende Abmessungen aufweisen, mit der gleichen Dichtung ausgestattet werden können, wobei in jedem Fall eine Information über die Klasse der Dichtung angezeigt wird, die von außen sichtbar bleibt.

2. Dichtung nach Anspruch 1, **dadurch gekennzeichnet, dass** vier die strahlenförmige Bänder (2) vorhanden sind, von denen sich jeweils zwei im wesentlichen diametral gegenüberliegen, und die zueinander um etwa 90° winklig versetzt sind.

3. Dichtung nach Anspruch 1 oder 2, **dadurch gekennzeichnet, dass** der starre ringförmige Teil einen starren Kern der Dichtung bildet (11, 13, 18).

4. Dichtung nach Anspruch 3, **dadurch gekennzeichnet, dass** der starre ringförmige Teil ein starrer Ring (16) ist, der die Dichtung außen umgibt und eine geringere Dicke als diese aufweist.

5. Dichtung nach Anspruch 4, **dadurch gekennzeichnet, dass** die Dichtung eine beschichtete metalloplastische Dichtung (J4) ist, die einen ringförmigen Einsatz (19) aufweist, der den von einer Metallhülle (20) umgebenen Kern bildet, der auf seinen zwei sich gegenüberliegenden Hauptseiten jeweils mit einem Anti-Haft-Material beschichtet ist, wobei die Dichtung mit einem äußeren Metallring (16) ausgestattet sein kann.
